# EUROPEAN PATENT SPECIFICATION

(11) **EP 2 390 542 B1**
(45) Date of publication and mention of the grant of the patent: **12.12.2012**
(21) Application number: 10005601.9
(22) Date of filing: 28.05.2010
(51) Int. Cl.: F16K 31/365, F16K 37/00, F16K 1/52

(54) **Differential pressure control valve**
Differenzialdruckregelventil
Vanne de contrôle de la pression différentielle

(43) Date of publication of application: 30.11.2011
(73) Proprietor: Honeywell Technologies Sarl, 1180 Rolle (CH)
(72) Inventor: Svejnoha, Petr, 682 01 Vyskov (CZ)
(74) Representative: Sturm, Christoph

(56) References cited:
- EP-A2- 0 382 179
- GB-A- 860 622
- GB-A- 1 148 964

## Description

The invention relates to a differential pressure control valve for hydronic installations as defined in the preamble of claim 1.

In hydronic heating or cooling installations, for example in two-pipe heating systems, a hydronic medium tempered by a heat exchanger, for example by a heating boiler, is provided to heating or cooling devices, for example to heating radiators, through at least one supply pipe, whereby the hydronic medium is returned back from the heating or cooling devices to the heat exchanger by at least one return pipe. It is necessary to provide a defined flow within the heating or cooling installation and to provide a defined pressure differential between the supply pipe and the return pipe. This is a significant requirement for an efficient operation of a hydronic heating or cooling installation.

In order to provide a defined flow within the heating or cooling installation, a so-called double regulating balancing valve (DRV valve) is used and installed e.g. in the supply pipe of the hydronic installations. In order to provide a defined pressure differential between the supply pipe and the return pipe of the heating or cooling installation, a so-called differential pressure control valve (DPC valve) is used and installed between the supply pipe and the return pipe of the hydronic installations. The present invention relates to such a differential pressure control valve.

Differential pressure control valves known from practical use comprise a valve housing and a valve plunger. The valve housing provides a valve inlet, a valve outlet and a valve seat, said valve inlet and valve outlet being connectable into a return pipe of a hydronic installation. The valve plunger is mounted to a first end of a valve stem and is acting together with the valve seat provided by the valve housing, whereby the differential pressure control valve is closed when the valve plunger is pressed against the valve seat, and whereby the differential pressure control valve is opened when the valve plunger is lifted up from the valve seat.

Differential pressure control valves known from practical use further comprise a diaphragm housing and diaphragm positioned inside said diaphragm housing. The diaphragm defines pressure chambers inside the diaphragm housing, namely a low pressure chamber being connectable through the valve inlet with the return pipe of the hydronic installation and a high pressure chamber being connectable to a supply pipe of the hydronic installation. The diaphragm is attached to the valve stem and acts on the valve stem depending on the differential pressure across the diaphragm.

With differential pressure control valves it is possible to maintain a constant differential pressure between the supply pipe and the return pipe. This constant differential pressure regulated by the differential pressure control valve is also called the set-point of the differential pressure control valve.

Differential pressure control valves known from practical use further comprise a presetting unit for adjusting or setting said set-point, whereby such a presetting unit comprises a spring acting with a first end against the diaphragm housing and with a second end against a spring nut attached to the valve stem. The spring nut is moveable relative to the valve stem in order to compress or decompress the spring thereby defining the spring force acting on the diaphragm through the valve stem and thereby defining a presetting value or set-point for the differential pressure control valve.

The diaphragm of such differential pressure control valves is made from elastic material so that the diaphragm can stick to the diaphragm housing thereby causing a blocking of the diaphragm.

Water pressure control valves have been disclosed for example in documents EP 0 382 179, GB 1 148 964 or GB 860622.

Differential pressure control valves known from practical use have the disadvantage that they do not provide any information about the position of the diaphragm. For that it is not possible to determine from the exterior of the differential pressure control valve if the diaphragm of the same is blocked.

Further on, differential pressure control valves known from practical use have the disadvantage that they do not allow an easy un-blocking of a blocked diaphragm.

Against this background, a novel differential pressure control valve is provided.

According to the present invention the presetting unit further comprises a hand wheel, a presetting screw acting together with the hand wheel, and an indicator element acting together with the presetting screw and the valve stem, whereby by rotating the hand wheel the presetting screw, the indicator element and the valve stem are rotatable causing a relative movement between the valve stem and the spring nut thereby adjusting the presetting value for valve. Said indicator element is not only rotatable but also axially moveable, namely axially moveable relative to the valve stem in a way that when the diaphragm is unblocked from the diaphragm housing the indicator element is moveable relative to the valve stem until the indicator element reaches a second end of the valve stem, and that when the diaphragm is blocked at the diaphragm housing the indicator element is blocked by the second end of the valve stem. By pressing the indicator element the blocked or unblocked status of the diaphragm is visible from the exterior of the valve. Further on, the differential pressure control valve according to the present invention provides information about the position of the diaphragm.

According to a preferred embodiment of the invention a diaphragm un-blocker element is attached to the valve stem, whereby said diaphragm un-blocker element contacts the diaphragm and unblocks a blocked diaphragm from the diaphragm housing when the valve stem is axially moved in closing direction of the valve. Said diaphragm un-blocker element preferably contacts the diaphragm before the valve plunger contacts the valve seat. According to this preferred embodiment the differential pressure control valve according to the present invention provides an easy un-blocking of a blocked diaphragm.

Preferred developments of the invention are provided by the dependent claims and the description which follows. Exemplary embodiments are explained in more detail on the basis of the drawing, in which:
- Figure 1: shows a cross sectional view of a differential pressure control valve according to the invention;
- Figure 2: shows an exploded view of the differential pressure control valve according to the invention;
- Figure 3: shows an enlarged detail of Figure 1;
- Figure 4: shows a first detail, namely a spring nut, of the differential pressure control valve according to the invention;
- Figure 5: shows a second detail, namely a spring, of the differential pressure control valve according to the invention;
- Figure 6: shows a third detail, namely a diaphragm un-blocker element, of the differential pressure control valve according to the invention;
- Figure 7: shows a fourth detail, namely a presetting screw, of the differential pressure control valve according to the invention;
- Figure 8: shows a fifth detail, namely an indicator element, of the differential pressure control valve according to the invention;
- Figure 9: shows another detail, namely a valve closing nut, of the differential pressure control valve according to the invention;
- Figure 10: shows another detail, namely a first part of a diaphragm housing of the differential pressure control valve according to the invention;
- Figure 11: shows another detail, namely a diaphragm, of the differential pressure control valve according to the invention; and
- Figure 12: shows another detail, namely a second part of a diaphragm housing of the differential pressure control valve according to the invention.

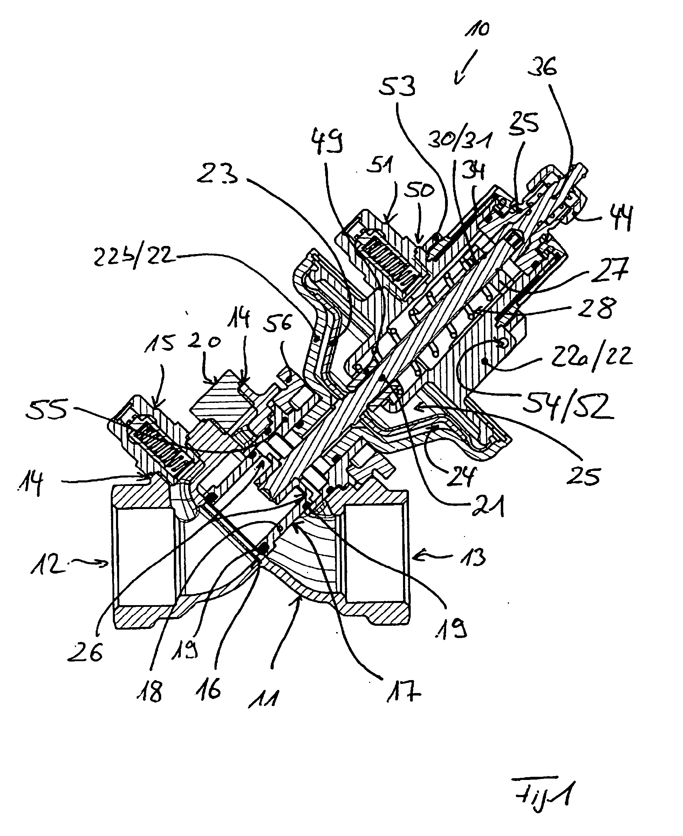

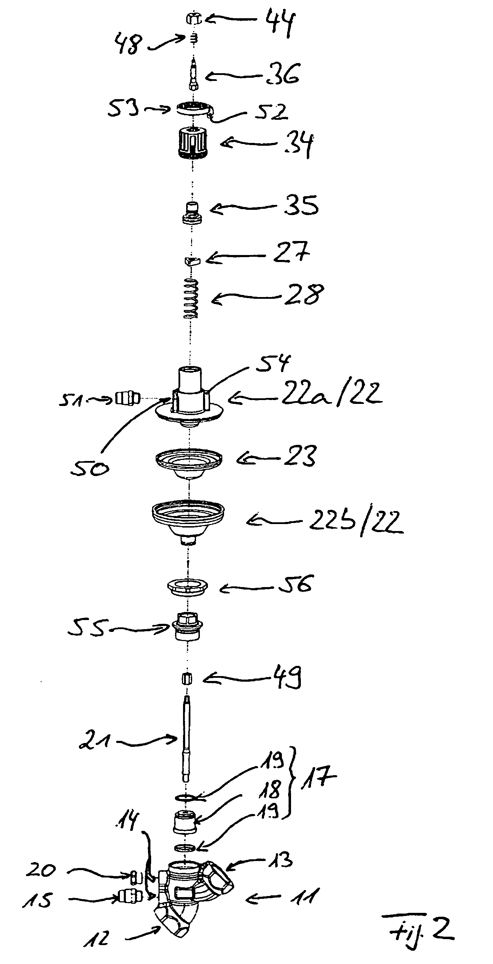

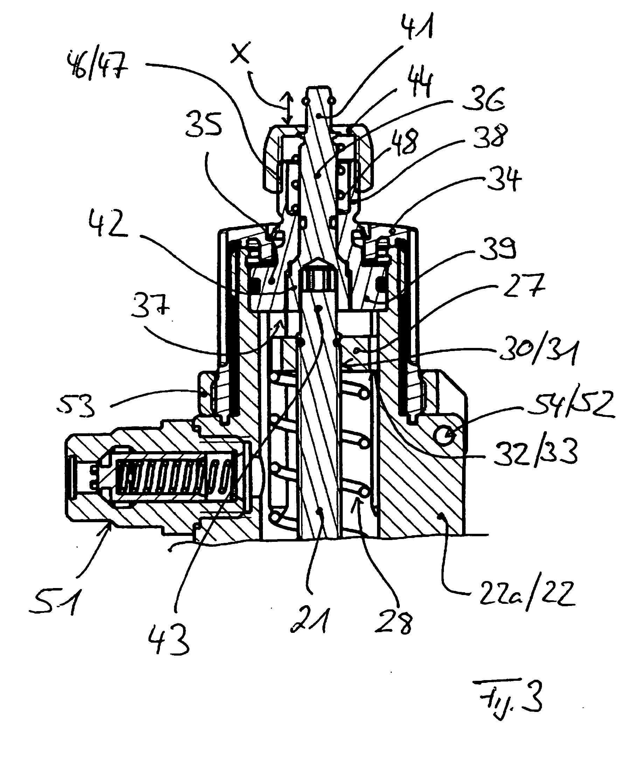

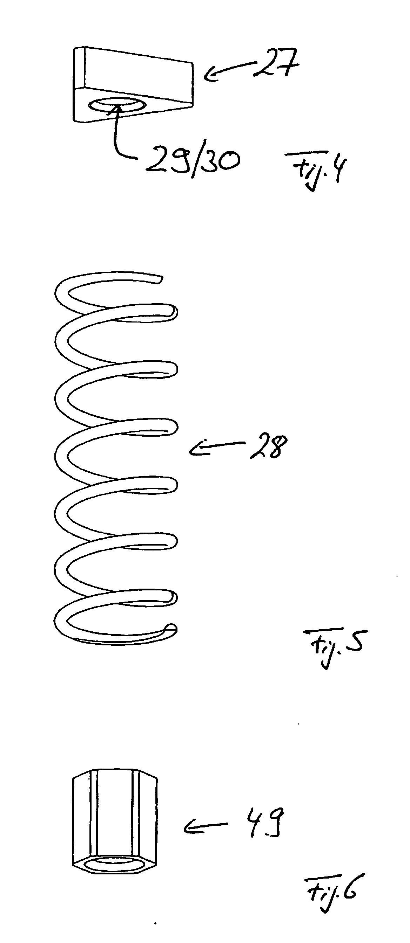

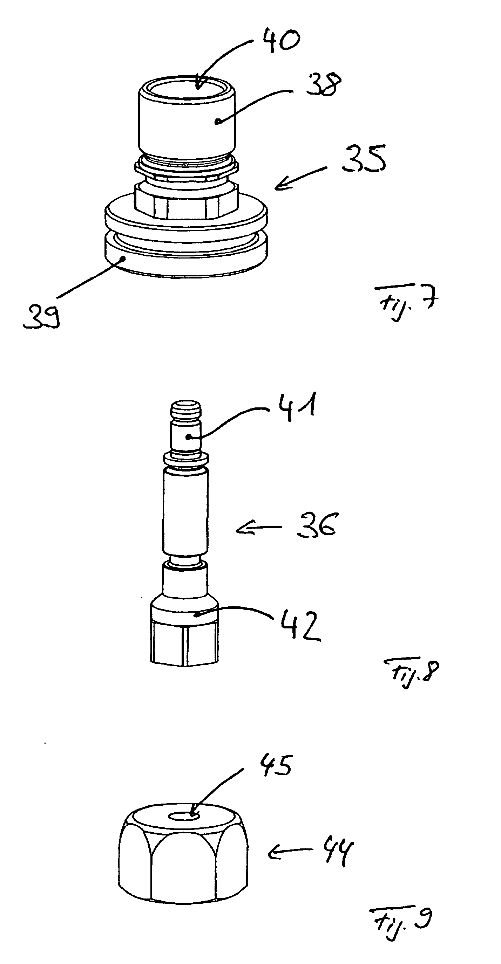

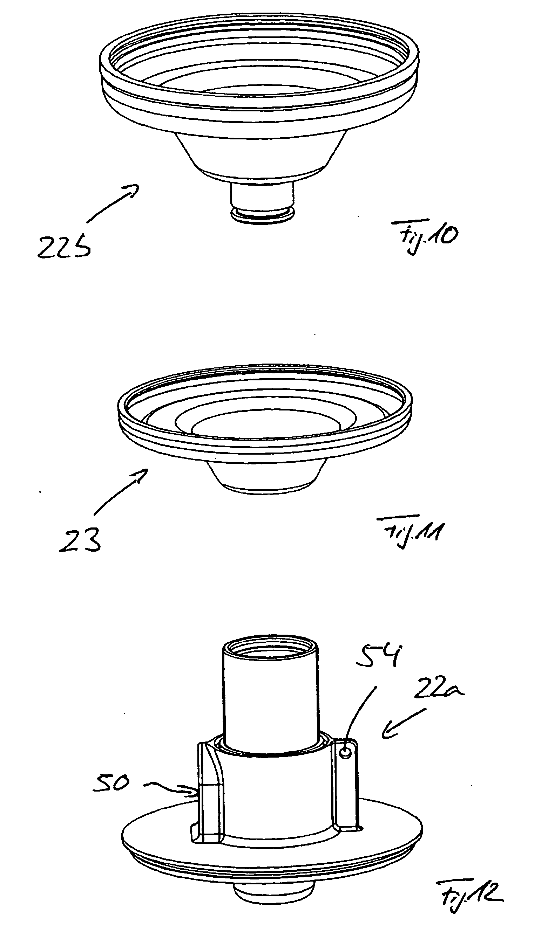

The present invention relates to a differential pressure control valve 10. Such a differential pressure control valve 10 is used in hydronic heating or cooling installations to provide a defined pressure differential between a supply pipe and a return pipe of the hydronic heating or cooling installation. Figure 1 shows a cross section through a preferred embodiment of a differential pressure control valve 10. Figure 2 shows an exploded view of the preferred embodiment of the differential pressure control valve 10. Figures 3 to 12 show details of the preferred embodiment of the differential pressure control valve 10.

The differential pressure control valve 10 comprises a valve housing 11. The valve housing 11 comprises a valve inlet 12, a valve outlet 13 and connection terminals 14 for pressure test valves 15. In Figure 1 there is only one pressure test valve 15 connected to one of said connection terminals 14. The other connection terminal 14 is closed by a closing element 20. Said valve inlet 12 and valve outlet 13 of the valve housing 11 are connectable into a return pipe of a hydronic installation.

The valve housing 11 provides a valve seat 16. A valve plunger 17 acts together with the valve seat 16. The differential pressure control valve 10 is closed when the valve plunger 17 is pressed against the valve seat 16. The differential pressure control valve 10 is opened when the valve plunger 17 is lifted up from the valve seat 16.

The valve plunger 17 comprises a plunger body 18 carrying sealing elements 19. When the differential pressure control valve 10 is closed one of said sealing elements 19 of the valve plunger 17 is pressed against the valve seat 16. The sealing elements 19 are provided by O-rings. The valve plunger 17 mounted to a first end of a valve stem 21.

The differential pressure control valve 10 further comprises a diaphragm housing 22 and diaphragm 23 positioned inside said diaphragm housing 22. The diaphragm housing 22 is provided by two diaphragm housing parts 22a and 22b. The diaphragm 23 is attached to the valve stem 21 and defines pressure chambers inside the diaphragm housing 22, namely a low pressure chamber 24 being connectable through the valve inlet 12 with the return pipe of the hydronic installation and a high pressure chamber 25 being connectable to a supply pipe of the hydronic installation.

In the shown embodiment the low pressure chamber 24 is positioned below the diaphragm 23 and the high pressure chamber 25 is positioned above the diaphragm 23. The pressure differential between the low pressure chamber 24 and the high pressure chamber 25 defines a force which acts on the diaphragm 23 and through the diaphragm on the valve stem 21 and thereby on the valve plunger 17. The force depending on the pressure differential between the low pressure chamber 24 and the high pressure chamber 25 tends to press the valve plunger 17 against the valve seat 16 and tends to close the differential pressure control valve 10.

The valve plunger 17 comprises openings 26 through which the low pressure chamber 24 is connectable with the valve inlet 12 and thereby with the return pipe.

The differential pressure control valve 10 further comprises a presetting unit comprising a spring nut 27 and a spring 28. The spring 28 is positioned inside a chamber provided by the diaphragm housing 22. The spring 28 is acting with a first end against the diaphragm housing 22 and with a second end against the spring nut 27.

The spring nut 27 is attached to the valve stem 21 in a way that the spring nut 27 has an opening 29 with an inner thread 30 through which a portion of the valve stem 21 having an outer thread 31 extends. The spring nut 27 is preferably of triangular shape whereby at least one section 32 of the spring nut 27 is guided in a guide slot 33 provided by the diaphragm housing 22 (see Figure 3).

The sprig nut 27 can not rotate relative to the diaphragm housing 22. However, the valve stem 21 can rotate relative to the spring nut 27. Such a rotation of the valve stem 21 relative to the spring nut 27 which is attached to the valve stem 21 using the threads 30, 31 causes an axial movement of the spring nut 27 relative to the valve stem 21. With such an axial movement of the spring nut 27 relative to the valve stem 21 it is possible to compress or decompress the spring 28 thereby defining a spring force acting on the diaphragm 23 through the valve stem 21.

The spring force provided by the spring 28 tends to lift up the valve plunger 17 from the valve seat 16. The spring force provided by the spring 28 acts in the opposite way than the force depending on the pressure differential between the low pressure chamber 24 and the high pressure chamber 25.

With the spring force provided by the spring 28 it is possible to define a so called presetting value for differential pressure control valve 10 and thereby a set-point of the differential pressure between the supply pipe and the return pipe of the hydronic installations.

Said presetting unit further comprises a hand wheel 34, a presetting screw 35 and an indicator element 36. The hand wheel 34 surrounds a portion of the diaphragm housing 22, namely of the upper part 22a of the diaphragm housing 22, and is rotatable relative to the diaphragm housing 22. The hand wheel 34 acts to together with presetting screw 35 in a way that a rotation of the hand wheel 34 causes a rotation of the presetting screw 35. The hand wheel 34 comprises an opening 37 through which said presetting screw 35 extends. A first portion 38 of said presetting screw 35 extends into the exterior of the diaphragm housing 22 and that a second portion 39 of said presetting screw 35 extends into the interior of said diaphragm housing 22.

The indicator element 36 acts together with the presetting screw 35 and the valve stem 21. A rotation of the hand the presetting screw 35 caused by the rotation of the hand wheel 34 causes a rotation of the indicator element 36, and the rotation of the indicator element 36 causes a rotation of the valve stem 21. Said rotation of the valve stem 21 causing an axial relative movement of the spring nut 27 relative to the valve stem 21. As explained above, with such an axial movement of the spring nut 27 relative to the valve stem 21 it is possible to compress or decompress the spring 28 thereby defining a spring force acting on the diaphragm 23 through the valve stem 21.

The presetting screw 35 comprises an opening 40 through which said indicator element 36 extends. A first end 41 of said indicator element 36 extends into the exterior of the diaphragm housing 22 and is operable from the exterior of the diaphragm housing 22. A second end 42 of said indicator element 36 extends into the interior of the diaphragm housing 22 and is positioned adjacent a second end 43 of the valve stem 21 (see Figure 3). As shown in Figures 1 and 3, the second end 42 of said indicator element 36 comprises a recess into which the second end 43 of the valve stem 21 extends.

Said indicator element 36 is not only rotatable but also axially moveable, namely axially moveable relative to the valve stem 21. Said indicator element 36 is axially moveable relative to the valve stem 21 in such a way that when the diaphragm 23 is unblocked from the diaphragm housing 22 the indicator element 36 is axially moveable relative to the valve stem 21 until the indicator element 36, namely the second end 42 of the same, reaches the second end 43 of the valve stem 21. When the diaphragm 23 is blocked at the diaphragm housing 22, the indicator element 36 is blocked by the second end 4 of the valve stem 21. By pressing the indicator element 36, namely the first end 41 of said indicator element 36, from the exterior of the diaphragm housing the same is axially moveable depending on the status and position of the diaphragm 23. When the diaphragm 23 is in a blocked status, the indicator element 36 is blocked and not axially moveable. When the diaphragm 23 is an unblocked status, the indicator element 36 is axially moveable. The distance x (see Figure 3) of this axial movement depends on the position of the unblocked diaphragm 23. By pressing the indicator element 36 the blocked or unblocked status of the diaphragm 23 is visible from the exterior of the valve 10. The differential pressure control valve 10 according to the present invention further provides information about the position of the unblocked diaphragm 23 being visible from the exterior of the valve 10 by the distance x of said axial movement. According to a preferred embodiment of the preset invention, a valve closing nut 44 is attached to said second portion 39 of the presetting screw 35 and thereby operable from the exterior of the differential pressure control valve 10. Said valve closing nut 44 comprises an opening 45 through which said indicator element 36 extends. The first end 41 of said indicator element 36 extends through said opening 45 of the valve closing nut 44 into the exterior of the valve 10.

Said valve closing nut 44 comprises an inner thread 46 acting together with an outer thread 47 of said first portion 39 of said presetting screw 35. By rotating said valve closing nut 44 relative to the presetting screw 35 said indicator element 36 is moveable axially relative to the valve stem 21 until the second end 42 of the indicator element 36 reaches the second end 43 of the valve stem 21. Afterwards by further rotating the valve closing nut 44 the indicator element 36 together with valve stem 21 is moved axially in closing direction of the valve 10 so that the valve plunger 17 attached to the fist end of the valve stem 21 is pressed against the valve seat 16 of the valve housing 11. In this way the valve 10 can be closed independently on its presetting by screwing the valve closing nut 44.

An indicator spring 48 is positioned between the presetting screw 35 and the indicator element 36 in a way that a first end of the indicator spring 48 acts against the presetting screw 35 and that a second end of the indicator spring 48 acts against the indicator element 36. Said indicator spring 48 tends to press the indicator element 36 in an upper position against the valve closing nut 44 so that with an unblocked diaphragm 23 the second end 42 of the indicator element 36 does not contact the send end 43 of the valve stem 21.

According to a preferred embodiment of the present invention, a diaphragm un-blocker element 49 is attached to the valve stem 21. Said diaphragm un-blocker element 49 contacts the diaphragm 23 and unblocks a blocked diaphragm 23 from the diaphragm housing 22 when the valve stem 21 is axially moved in closing direction of the valve 10. Said diaphragm un-blocker element 49 contacts the diaphragm 23 before the valve plunger 17 contacts the valve seat 16. In this way the diaphragm 23 can be unblocked by screwing the valve closing nut 44.

As shown in Figure 1 the diaphragm housing 22, namely of the upper part 22a of the diaphragm housing 22, comprises like the valve housing 11 a connection terminal 50 for a pressure test valve 51.

A locking element 53 having an opening 52 is assigned to the hand wheel 34 which acts together with the upper part 22a of the diaphragm housing 22 in such a way that a lock can be inserted through the openings 52 of the locking element 53 and an opening 54 of the upper part 22a of the diaphragm housing 22. When such a lock is inserted through said openings 52, 54 it is not possible to rotate the hand wheel 34.

The diaphragm housing 22 is mounted to the valve housing 11 in such a way that a lower portion of the lower part 22b of the diaphragm housing 22 is inserted into the valve body by an insert body 55. Said insert body 55 is partially inserted into the valve housing 11 and fixed at the valve housing 11 by a nut 56.

### List of reference signs

- 10: differential pressure control valve
- 11: valve housing
- 12: valve inlet
- 13: valve outlet
- 14: connection terminal
- 15: pressure test valve
- 16: valve seat
- 17: valve plunger
- 18: plunger body
- 19: sealing element
- 20: closing element
- 21: valve stem
- 22: diaphragm housing
- 22a: diaphragm housing part
- 22b: diaphragm housing part
- 23: diaphragm
- 24: low pressure chamber
- 25: high pressure chamber
- 26: opening
- 27: spring nut
- 28: spring
- 29: opening
- 30: inner thread
- 31: outer thread
- 32: section
- 33: guide slot
- 34: hand wheel
- 35: presetting screw
- 36: indicator element
- 37: opening
- 38: first portion
- 39: second portion
- 40: opening
- 41: first end
- 42: second end
- 43: second end
- 44: valve closing nut
- 45: opening
- 46: inner thread
- 47: outer thread
- 48: indicator spring
- 49: diaphragm un-blocker element
- 50: connection terminal
- 51: pressure test valve
- 52: opening
- 53: locking element
- 54: opening
- 55: insert body
- 56: nut

## Claims

1. Differential pressure control valve for hydronic installations, comprising:
a valve housing (11) providing a valve inlet (12), a valve outlet (13) and a valve seat (16), said valve inlet (12) and valve outlet (13) being connectable into a return pipe of the hydronic installation;
a valve plunger (17) mounted to a first end of a valve stem (21) and acting together with the valve seat (16), whereby the valve is closed when the valve plunger (17) is pressed against the valve seat (16), and whereby the valve is opened when the valve plunger (17) is lifted up from the valve seat (16);
a diaphragm housing (22) and diaphragm (23) positioned inside said diaphragm housing (22), whereby the diaphragm (23) is attached to the valve stem (21) and defines pressure chambers inside the diaphragm housing (22), namely a low pressure chamber (24) being connectable through the valve inlet (12) with the return pipe of the hydronic installation and a high pressure chamber (25) being connectable to a supply pipe of the hydronic installation;
a presetting unit comprising a spring (28) acting with a first end against the diaphragm housing (22) and with a second end against a spring nut (27) attached to the valve stem (21), whereby the spring nut (27) is moveable relative to the valve stem (21) in order to compress or decompress the spring (28) thereby defining the spring force acting on the diaphragm (23) through the valve stem and thereby defining a presetting value for valve; **characterized in that**
said presetting unit further comprises a hand wheel (34), a presetting screw (35) acting together with the hand wheel, and an indicator element (36) acting together with the presetting screw and the valve stem, whereby by rotating the hand wheel (34) the presetting screw (35), the indicator element (36) and the valve stem (21) are rotatable causing a relative movement between the valve stem and the spring nut thereby adjusting the presetting value;
said indicator element (36) is also axially moveable relative to the valve stem (21) in a way that when the diaphragm (23) is unblocked from the diaphragm housing (22) the indicator element (36) is moveable relative to the valve stem (21) until the indicator element reaches a second end of the valve stem, and that when the diaphragm (23) is blocked at the diaphragm housing (22) the indicator element (36) is blocked by the second end of the valve stem (21).

2. Differential pressure control valve as claimed in claim 1, **characterized in that** by pressing the indicator element (36) the blocked or unblocked status of the diaphragm is visible from the exterior of the valve, and that in case of an unblocked diaphragm the distance of the axial movement of the indicator element (36) depends on the position of the unblocked diaphragm (23) and thereby the position of an unblocked diaphragm is also visible from the exterior of the valve.

3. Differential pressure control valve as claimed in claim 1 or 2, **characterized in that** said hand wheel (34) surrounds a portion of the diaphragm housing (22), that said hand wheel (34) comprises an opening (37) through which said presetting screw (35) extends, and that said presetting screw (35) comprises an opening (40) through which said indicator element (36) extends, whereby a first end (41) of said indicator element (36) is operable from the exterior of the diaphragm housing (22) and whereby a second end (42) of said indicator element (36) extends into the interior of the diaphragm housing (22) and is positioned adjacent the second end of the valve stem (21).

4. Differential pressure control valve as claimed in one of claims 1 to 3, **characterized in that** a first portion (38) of said presetting screw (35) extends into the exterior of the diaphragm housing (22) and that a second portion (39) of said presetting screw (35) extends into the interior of said diaphragm housing (22), whereby a valve closing nut (44) is attached to said second portion (38) of the presetting screw (44) and thereby operable from the exterior of the valve, and whereby said valve closing nut (44) comprises an opening (45) through which said indicator element (36) extends.

5. Differential pressure control valve as claimed in claim 4, **characterized in that** said valve closing nut (44) comprises an inner thread acting together with an outer thread of said first portion (38) of said presetting screw (35), whereby by rotating said valve closing nut (44) relative to the presetting screw (35) said indicator element (36) is moveable axially relative to the valve stem (21) until the second end (42) of the indicator element (36) reaches the second end of the valve stem (21) thereby moving also the valve stem (21) axially so that the valve plunger (17) attached to the fist end of the valve stem (21) is pressed against the valve seat (16) of the valve housing (11).

6. Differential pressure control valve as claimed in claim 4 or 5, **characterized in that** an indicator spring (48) is positioned between the presetting screw (35) and the indicator element (36) in a way that a first end of the indicator spring (48) acts against the presetting screw (35) and that a second end of the indicator spring (48) acts against the indicator element (36).

7. Differential pressure control valve as claimed in one of claims 1 to 6, **characterized in that** a diaphragm un-blocker element (49) is attached to the valve stem (21), whereby said diaphragm un-blocker element (49) contacts the diaphragm (23) and unblocks a blocked diaphragm (23) from the diaphragm housing (22) when the valve stem (21) is axially moved in closing direction of the valve.

8. Differential pressure control valve as claimed in claim 6 or 7, **characterized in that** said diaphragm un-blocker element (49) contacts the diaphragm (23) before the valve plunger (17) contacts the valve seat (16).

## Patentansprüche

1. Differenzdruckregelventil für hydronische Anlagen, das Folgendes aufweist:
ein Ventilgehäuse (11), das einen Ventileinlass (12), einen Ventilauslass (13) und einen Ventilsitz (16) bereitstellt, wobei der Ventileinlass (12) und Ventilauslass (13) in eine Rücklaufleitung der hydronischen Anlage verbindbar sind;
einen Ventilkolben (17), der an einem ersten Ende eines Ventilstößels (21) angebracht ist und mit dem Ventilsitz (16) zusammenwirkt, wobei das Ventil geschlossen ist, wenn der Ventilkolben (17) gegen den Ventilsitz (16) gedrückt ist, und wobei das Ventil geöffnet ist, wenn der Ventilkolben (17) vom Ventilsitz (16) abgehoben ist;
ein Membrangehäuse (22) und eine Membran (23) die innerhalb des Membrangehäuses (22) positioniert ist, wobei die Membran (23) am Ventilstößel (21) angebracht ist und Druckkammern innerhalb des Membrangehäuses (22) definiert, nämlich eine Niederdruckkammer (24), die durch den Ventileinlass (12) mit der Rücklaufleitung der hydronischen Anlage verbindbar ist, und eine Hochdruckkammer (25), die mit einer Vorlaufleitung der hydronischen Anlage verbindbar ist;
eine Voreinstelleinheit, die eine Feder (28) aufweist, die mit einem ersten Ende gegen das Membrangehäuse (22) und mit einem zweiten Ende gegen eine Federmutter (27) wirkt, die am Ventilstößel (21) angebracht ist, wobei die Federmutter (27) relativ zum Ventilstößel (21) zu dem Zweck beweglich ist, die Feder (28) zu komprimieren oder zu dekomprimieren, wodurch die Federkraft definiert wird, die durch den Ventilstößel auf die Membran (23) wirkt, und wodurch ein Ventil-Voreinstellwert definiert wird; **dadurch gekennzeichnet, dass**
die Voreinstelleinheit ferner ein Handrad (34), eine Voreinstellschraube (35), die mit dem Handrad zusammenwirkt, und ein Anzeigeelement (36) aufweist, das mit der Voreinstellschraube und dem Ventilstößel zusammenwirkt, wobei durch Drehen des Handrades (34) die Voreinstellschraube (35), das Anzeigeelement (36) und der Ventilstößel (21) drehbar sind, wobei eine Relativbewegung zwischen dem Ventilstößel und der Federmutter verursacht wird, wodurch der Voreinstellwert eingestellt wird;
das Anzeigeelement (36) auch axial relativ zum Ventilstößel (21) in einer Weise beweglich ist, dass, wenn die Membran (23) nicht vom Membrangehäuse (22) blockiert ist, das Anzeigeelement (36) relativ zum Ventilstößel (21) beweglich ist, bis das Anzeigeelement ein zweites Ende des Ventilstößels erreicht, und dass, wenn die Membran (23) am Membrangehäuse (22) blockiert ist, das Anzeigeelement (36) durch das zweite Ende des Ventilstößels (21) blockiert ist.

2. Differenzdruckregelventil nach Anspruch 1, **dadurch gekennzeichnet, dass** durch Drücken des Anzeigeelementes (36) der blockierte oder nicht blockierte Zustand der Membran vom Äußeren des Ventils sichtbar ist und dass im Falle einer nicht blockierten Membran die Wegstrecke der axialen Bewegung des Anzeigeelementes (36) von der Position der nicht blockierten Membran (23) abhängt und dadurch die Position einer nicht blockierten Membran auch vom Äußeren des Ventils sichtbar ist.

3. Differenzdruckregelventil nach Anspruch 1 oder 2, **dadurch gekennzeichnet, dass** das Handrad (34) einen Abschnitt des Membrangehäuses (22) umgibt, dass das Handrad (34) eine Öffnung (37) aufweist, durch die sich die Voreinstellschraube (35) erstreckt, und dass die Voreinstellschraube (35) eine Öffnung (40) aufweist, durch die sich das Anzeigeelement (36) erstreckt, wobei ein erstes Ende (41) des Anzeigeelementes (36) vom Äußeren des Membrangehäuses (22) betätigbar ist und wobei sich ein zweites Ende (42) des Anzeigeelementes (36) in das Innere des Membrangehäuses (22) erstreckt und dem zweiten Ende des Ventilstößels (21) benachbart positioniert ist.

4. Differenzdruckregelventil nach einem der Ansprüche 1 bis 3, **dadurch gekennzeichnet, dass** sich ein erster Abschnitt (38) der Voreinstellschraube (35) in das Äußere des Membrangehäuses (22) erstreckt und dass sich ein zweiter Abschnitt (39) der Voreinstellschraube (35) in das Innere des Membrangehäuses (22) erstreckt, wobei am zweiten Abschnitt (38) der Voreinstellschraube (35) eine Ventilschließmutter (44) angebracht und dadurch vom Äußeren des Ventils betätigbar ist und wobei die Ventilschließmutter (44) eine Öffnung (45) aufweist, durch die sich das Anzeigeelement (36) erstreckt.

5. Differenzdruckregelventil nach Anspruch 4, **dadurch gekennzeichnet, dass** die Ventilschließmutter (44) ein Innengewinde aufweist, das mit einem Außengewinde des ersten Abschnitts (38) der Voreinstellschraube (35) zusammenwirkt, wobei durch Drehen der Ventilschließmutter (44) relativ zur Voreinstellschraube (35) das Anzeigeelement (36) axial relativ zum Ventilstößel (21) beweglich ist, bis das zweite Ende (42) des Anzeigeelementes (36) das zweite Ende des Ventilstößels (21) erreicht, wodurch auch der Ventilstößel (21) axial derart bewegt wird, dass der Ventilkolben (17), der am ersten Ende des Ventilstößels (21) angebracht ist, gegen den Ventilsitz (16) des Ventilgehäuses (11) gedrückt wird.

6. Differenzdruckregelventil nach Anspruch 4 oder 5, **dadurch gekennzeichnet, dass** zwischen der Voreinstellschraube (35) und dem Anzeigeelement (36) eine Anzeigefeder (48) in einer Weise positioniert ist, dass ein erstes Ende der Anzeigefeder (48) gegen die Voreinstellschraube (35) wirkt und dass ein zweites Ende der Anzeigefeder (48) gegen das Anzeigeelement (36) wirkt.

7. Differenzdruckregelventil nach einem der Ansprüche 1 bis 6, **dadurch gekennzeichnet, dass** am Ventilstößel (21) ein Membranentblockierelement (49) angebracht ist, wobei das Membranentblockierelement (49) die Membran (23) berührt und eine blockierte Membran (23) vom Membrangehäuse (22) entblockiert, wenn der Ventilstößel (21) axial in Schließrichtung des Ventils bewegt wird.

8. Differenzdruckregelventil nach Anspruch 6 oder 7, **dadurch gekennzeichnet, dass** das Membranentblockierelement (49) die Membran (23) berührt, bevor der Ventilkolben (17) den Ventilsitz (16) berührt.

## Revendications

1. Soupape de régulation de pression différentielle pour des installations hydroniques, comprenant :
un boîtier de soupape (11) fournissant un orifice d'entrée de soupape (12), un orifice de sortie de soupape (13) et un siège de soupape (16), ledit orifice d'entrée de soupape (12) et ledit orifice de sortie de soupape (13) pouvant être raccordés dans une conduite de retour de l'installation hydronique ;
un plongeur de soupape (17) monté sur une première extrémité d'une tige de soupape (21) et agissant conjointement avec le siège de soupape (16), comme quoi que la soupape est fermée lorsque le plongeur de soupape (17) est pressé contre le siège de soupape (16), et comme quoi la soupape est ouverte lorsque le plongeur de soupape (17) est soulevé du siège de soupape (16) ;
un logement de membrane (22) et une membrane (23) positionnée à l'intérieur dudit logement de membrane (22), comme quoi la membrane (23) est attachée à la tige de soupape (21) et définit des chambres sous pression à l'intérieur du logement de la membrane (22), à savoir une chambre basse pression (24) pouvant être raccordée par l'intermédiaire de l'orifice d'entrée de la soupape (12) à la conduite de retour de l'installation hydronique et une chambre haute pression (25) pouvant être raccordée à un tuyau d'alimentation de l'installation hydronique ;
une unité de préréglage comprenant un ressort (28) agissant avec une première extrémité contre le logement de la membrane (22) et avec une deuxième extrémité contre un écrou de ressort (27) attaché à la tige de soupape (21), comme quoi cet écrou de ressort (27) peut être bougé par rapport à la tige de soupape (21) de façon à comprimer ou à décomprimer le ressort (28), définissant ainsi la force du ressort agissant sur la membrane (23) par l'intermédiaire de la tige de soupape et définissant ainsi une valeur de préréglage pour la soupape ; **caractérisée en ce que**
ladite unité de préréglage comprend en outre une roue à main (34), une vis de préréglage (35) agissant conjointement avec la roue à main, et un élément indicateur (36) agissant conjointement avec la vis de préréglage et la tige de soupape, comme quoi, en tournant la roue à main (34), la vis de préréglage (35), l'élément indicateur (36) et la tige de soupape (21) peuvent être tournés, entraînant un mouvement relatif entre la tige de soupape et l'écrou du ressort, et l'écrou du ressort modifiant ainsi la valeur de préréglage ;
ledit élément indicateur (36) peut aussi être bougé axialement par rapport à la tige de soupape (21) de sorte que, lorsque la membrane (23) est débloquée du logement de la membrane (22), l'élément indicateur (36) peut être bougé par rapport à la tige de soupape (21) jusqu'à ce que l'élément indicateur atteigne une deuxième extrémité de la tige de soupape, et de sorte que, lorsque la membrane (23) est bloquée au niveau du logement de la membrane (22), l'élément indicateur (36) est bloqué par la deuxième extrémité de la tige de soupape (21).

2. Soupape de régulation de pression différentielle selon la revendication 1, **caractérisée en ce que**, en pressant sur l'élément indicateur (36), l'état bloqué ou débloqué de la membrane est visible depuis l'extérieur de la soupape, et **en ce que**, dans le cas d'une membrane débloquée, la distance du mouvement axial de l'élément indicateur (36) dépend de la position de la membrane débloquée (23) et, de cette façon, la position d'une membrane débloquée est aussi visible depuis l'extérieur de la soupape.

3. Soupape de régulation de pression différentielle selon la revendication 1 ou 2, **caractérisée en ce que** ladite roue à main (34) entoure une partie du logement de la membrane (22), **en ce que** ladite roue à main (34) comporte une ouverture (37) à travers laquelle s'étend ladite vis de préréglage (35), et **en ce que** ladite vis de préréglage (35) comporte une ouverture (40) à travers laquelle s'étend ledit élément indicateur (36), comme quoi une première extrémité (41) dudit élément indicateur (36) peut être manoeuvrée depuis l'extérieur du logement de la membrane (22) et comme quoi une deuxième extrémité (42) dudit élément indicateur (36) s'étend dans l'intérieur du logement de la membrane (22) et est positionnée de manière adjacente à la deuxième extrémité de la tige de soupape (21).

4. Soupape de régulation de pression différentielle selon une des revendications 1 à 3, **caractérisée en ce qu'**une première partie (38) de ladite vis de préréglage (35) s'étend dans l'extérieur du logement de la membrane (22) et **en ce qu'**une deuxième partie (39) de ladite vis de préréglage (35) s'étend dans l'intérieur dudit logement de la membrane (22), comme quoi un écrou de fermeture de soupape (44) est attaché à ladite deuxième partie (38) de ladite vis de préréglage (55) et peut ainsi être manoeuvré depuis l'extérieur de la soupape, et comme quoi ledit écrou de fermeture de la soupape (44) comporte une ouverture (45) à travers laquelle s'étend l'élément indicateur (36).

5. Soupape de régulation de pression différentielle selon la revendication 4, **caractérisée en ce que** ledit écrou de fermeture de la soupape (44) comporte un filet interne agissant conjointement avec un filet externe de ladite première partie (38) de ladite vis de préréglage (35), comme quoi, en tournant ledit écrou de fermeture de la soupape (44) par rapport à la vis de préréglage (35), ledit élément indicateur (36) peut être bougé axialement par rapport à la tige de soupape (21) jusqu'à ce que la deuxième extrémité (42) de l'élément indicateur (36) atteigne la deuxième extrémité de la tige de soupape (21), bougeant ainsi également la tige de soupape (21) axialement de manière à ce que le plongeur de soupape (17) attaché à la première extrémité de la tige de soupape (21) soit pressé contre le siège de soupape (16) du boîtier de la soupape (11).

6. Soupape de régulation de pression différentielle selon la revendication 4 ou 5, **caractérisée en ce qu'**un ressort indicateur (48) est positionné entre la vis de préréglage (35) et l'élément indicateur (36) de sorte qu'une première extrémité du ressort indicateur (48) agit contre la vis de préréglage (35) et qu'une deuxième extrémité du ressort indicateur (48) agit contre l'élément indicateur (36).

7. Soupape de régulation de pression différentielle selon une des revendications 1 à 6, **caractérisée en ce qu'**un élément de déblocage de membrane (49) est attaché à la tige de soupape (21), comme quoi ledit élément de déblocage de membrane (49) entre en contact avec la membrane (23) et débloque une membrane bloquée (23) du logement de la membrane (22) lorsque la tige de soupape (21) est bougée axialement dans la direction de fermeture de la soupape.

8. Soupape de régulation de pression différentielle selon la revendication 6 ou 7, **caractérisée en ce que** ledit élément de déblocage de la membrane (49) entre en contact avec la membrane (23) avant que le plongeur de soupape (17) n'entre en contact avec le siège de soupape (16).
